# FASCICULE DE BREVET EUROPEEN

(11) **EP 2 658 730 B1**
(45) Date de publication et mention de la délivrance du brevet: **18.03.2015**
(21) Numéro de dépôt: 11811018.8
(22) Date de dépôt: 21.12.2011
(51) Int. Cl.: B29D 30/06, B60C 11/03

(54) **MOULE DE VULCANISATION POUR LE MOULAGE ET LA VULCANISATION D'UN PNEUMATIQUE**
VULKANISIERFORM ZUM FORMEN UND VULKANISIEREN EINES REIFENS UND MIT DIESER REIFENVULKANISIERFORM HERGESTELLTER REIFEN
VULCANIZING MOULD FOR MOULDING AND VULCANIZING A TYRE AND TYRE PRODUCED USING SAID TYRE VULCANIZING MOULD ET BANDAGE FABRIQUÉ AVEC CE MOULE DE VULCANISATION DE BANDAGE

(30) Priorité: 30.12.2010 FR 1061358
(43) Date de publication de la demande: 06.11.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ROTY, Gaël, Tokyo 102-8176 (JP); YOKOKAWA, Kazutaka, Tokyo 102-8176 (JP)
(74) Mandataire: Demaure, Pierre-Yves
(86) Numéro de dépôt international: PCT/EP2011/073623
(87) Numéro de publication internationale: WO 2012/089589

(56) Documents cités:
- EP-A1- 0 579 436
- EP-A2- 0 876 889
- EP-A2- 1 232 843
- WO-A1-00/76790
- JP-A- 4 201 610
- JP-A- 8 034 212
- US-A- 5 769 990

## Description

### DOMAINE DE L'INVENTION

La présente invention concerne un moule de vulcanisation pour le moulage et la vulcanisation d'un pneumatique, et plus particulièrement un moule pour le moulage et la vulcanisation d'un pneumatique présentant une sculpture permettant de réduire très sensiblement le bruit au roulage de ce pneumatique.

### ETAT DE LA TECHNIQUE

Le document EP0876889 divulgue un moule destiné à mouler et à vulcaniser des pneumatiques. Ce moule comprend radialement en interne une surface de moulage destinée à mouler la surface de roulement des pneumatiques. La surface de moulage est formée par l'assemblage d'une pluralité de segments de moule.

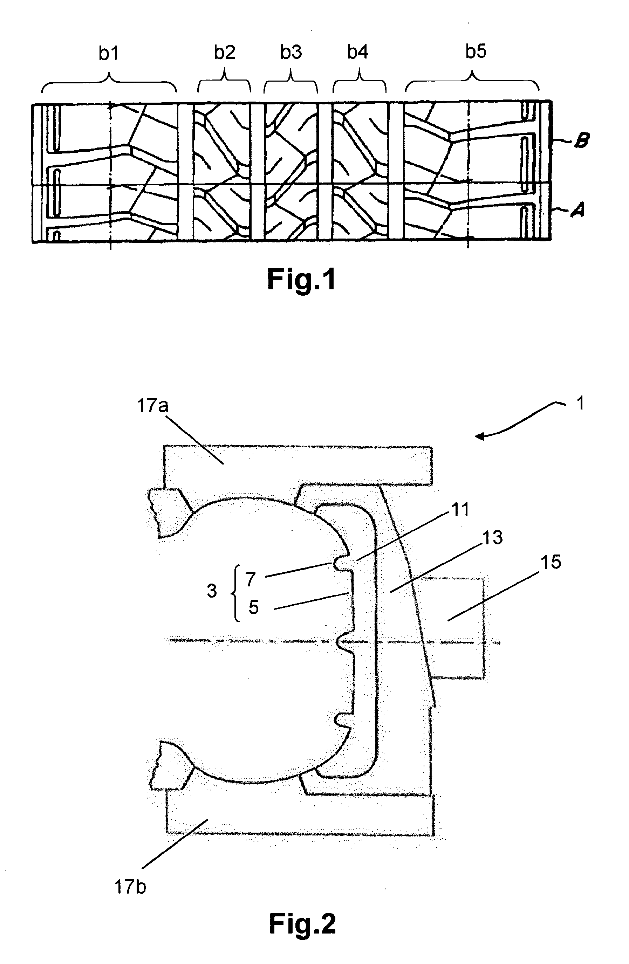

La figure 1 présente une partie de la surface de moulage de ce moule. Cette partie de la surface de moulage est formée par l'assemblage de deux segments de moule A, B.

La partie de la surface de moulage comprend une pluralité de motifs organisés en bandes circonférentielles b1, b2, b3, b4, b5. Chaque bande circonférentielle comporte des motifs dérivant d'un même motif de base. Par motif de base, on entend un dessin formé d'un ensemble de protubérances et de creux arrangés d'une manière prédéterminée, ce dessin étant répété n fois dans la bande circonférentielle.

Dans le document EP0876889, chaque segment de moule comprend plusieurs motifs appartenant aux différentes bandes circonférentielles et chaque segment de moule comprend un seul motif de chaque bande circonférentielle. Ainsi, si chaque bande circonférentielle comprend n motifs, le moule comprend alors n segments de moule.

Afin d'améliorer d'avantage les performances acoustiques des pneumatiques, il a été proposé d'augmenter de manière importante le nombre de motifs dans les bandes circonférentielles et donc de diminuer en conséquence la largeur des motifs selon la direction circonférentielle. Les segments ayant une largeur plus faible, ceux-ci sont alors plus fragiles et on augmente les risques de détérioration de ces segments lors de leur manipulation, par exemple lors de leur montage dans le moule.

D'autres moules de vulcanisation de pneumatiques sont décrits dans la demande JP 4201610 A et le brevet US 5,769,990.

Il existe donc un besoin d'améliorer la réduction du bruit au roulage des pneumatiques tout en garantissant une grande robustesse des segments appartenant au moule moulant lesdits pneumatiques.

### RESUME DE L'INVENTION

L'invention concerne un moule de vulcanisation pour le moulage et la vulcanisation d'un pneumatique. Le moule comprend une surface de moulage s'étendant circonférentiellement dans le moule, ladite surface de moulage comportant deux bandes de motifs d'extrémité disposées respectivement à proximité de deux bords de la surface de moulage et au moins une bande de motifs intermédiaire disposée entre les deux bandes de motifs d'extrémité et pour au moins une des bandes d'extrémité tous les motifs de ladite bande dérivent d'un même motif de base. La bande d'extrémité comprend au moins trois types de motifs et les motifs appartenant à un même type de motifs ont une même largeur différente de la largeur des motifs appartenant aux autres types de motifs de la bande. Les motifs sont arrangés dans la bande d'extrémité en fonction de leur largeur selon une séquence prédéfinie, la somme des largeurs des motifs appartenant à la bande d'extrémité correspondant à la circonférence de la surface de moulage, les motifs de la bande d'extrémité étant répartis sur des segments de moule destinés à être assemblés pour former la surface de moulage. La bande d'extrémité comprend des motifs appartenant à un premier type de motifs et les motifs du premier type de motifs ont une largeur inférieure à la largeur des motifs appartenant aux autres types de motifs de la bande d'extrémité et les motifs du premier type de motifs sont groupés au moins par deux sur des premiers segments du moule. Les motifs de la bande d'extrémité n'appartenant pas au premier type de motifs appartiennent à des seconds segments, chaque second segment ne comprenant qu'un seul motif de ladite bande d'extrémité.

Ainsi, l'invention propose de grouper au moins par deux les motifs ayant la plus faible largeur. On s'assure ainsi que les premiers segments portant ces motifs ont une largeur suffisante pour résister aux efforts mécaniques liés à leur manipulation. L'invention propose également de ne grouper que les motifs du premier type de motif et pas les motifs d'un second type de motif ou d'un troisième type de motif ayant des largeurs plus importantes. On limite ainsi le nombre de segments ayant plus de deux motifs appartenant à une même bande circonférentielle.

L'invention propose également de ne pas grouper des motifs ayant des largeurs différentes sur un même premier segment. De cette manière, on améliore la réduction du bruit lors d'un roulage d'un pneumatique moulé à partir du moule objet de l'invention.

Dans une variante de réalisation, les premiers segments de moule et les seconds segments de moule comprennent chacun un motif appartenant à une bande de motifs intermédiaire. Les motifs de la bande intermédiaire appartenant aux premiers segments de moule comportent chacun une protubérance ayant une forme globalement parallélépipédique dont la plus grande dimension s'étend selon une première direction en faisant un angle supérieur ou égal à 40° avec une direction transversale et les motifs de la bande intermédiaire appartenant aux seconds segments de moule comportent chacun une protubérance ayant une forme globalement parallélépipédique dont la plus grande dimension s'étend selon une seconde direction en faisant un angle inférieur à 40° avec ladite direction transversale.

On réduit davantage le bruit généré par un pneumatique moulé à partir du moule objet de l'invention, au cours d'un roulage de ce pneumatique.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la figure 1 représente schématiquement une vue partielle de la surface de moulage d'un moule conforme à l'art antérieur ;
- la figure 2 représente schématiquement une vue en coupe d'un moule objet de l'invention;
- la figure 3 représente schématiquement une vue partielle de la surface de moulage du moule de la figure 2.

Dans la description qui va suivre, des éléments sensiblement identiques ou similaires seront désignés par des références identiques.

La figure 2 représente une vue en coupe d'un exemple d'un moule 1 conforme à l'invention, pour la vulcanisation d'un pneumatique.

Le moule 1 comporte une surface de moulage 3 disposée à l'intérieure du moule. Cette surface de moulage 3 comprend un fond 5 et des parties faisant saillie sur le fond en formant des protubérances 7. Le fond 5 de la surface de moulage est destiné à mouler une surface de roulement d'un pneumatique et les protubérances 7 sont destinées à mouler des rainures ou des incisions dans la bande de roulement de ce pneumatique.

La surface de moulage 3 est formée par l'assemblage bord à bord de plusieurs segments 11, dont un seul est ici représenté. Le segment 11 est fixé à un secteur 13 et le secteur 13 est relié à un actionneur 15.

Le moule comporte également une coquille supérieure 17a et une coquille inférieure 17b. Cette coquille supérieure 17a est destinée à être reliée à un plateau supérieur d'une presse de vulcanisation. La coquille inférieure 17b est destinée à être reliée à un plateau inférieur de la presse de vulcanisation. La coquille supérieure 17a et la coquille inférieure 17b sont destinées à mouler les flancs du pneumatique.

Le moule 1 est ici dans une position fermée dans laquelle les segments 11, la coquille supérieure 17a, la coquille inférieure 17b définissent une cavité toroïdale.

Dans une position ouverte du moule 1, la coquille supérieure 17a, la coquille inférieure 17b, les segments 11 sont écartés en vue de permettre le chargement du pneumatique dans le moule 1 ou le déchargement dudit pneumatique hors du moule 1.

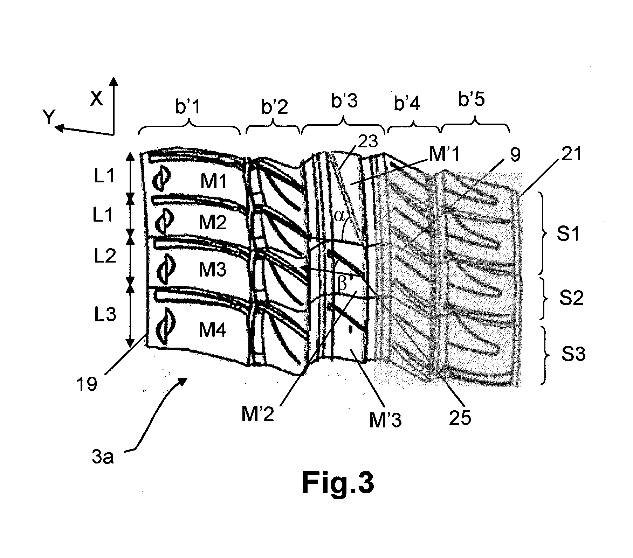

La figure 3 représente schématiquement une vue partielle de la surface de moulage du moule de la figure 2.

La partie 3a de la surface de moulage s'étend selon une direction circonférentielle X. Cette partie 3a est limitée par deux bords 19, 21.

La partie 3a de la surface de moulage comprend une pluralité de bandes circonférentielles b'1, b'2, b'3, b'4, b'5. On distingue ainsi deux bandes circonférentielles d'extrémité b'1, b'5 disposées respectivement à proximité des deux bords 19, 21 et des bandes circonférentielles intermédiaires b'2, b'3, b'4 disposées entre les deux bandes circonférentielles d'extrémité b' 1, b'5.

Chaque bande circonférentielle comprend une pluralité de motifs. Plus particulièrement, chaque bande d'extrémité b'1, b'5 disposée respectivement à proximité des bords 19, 21 comprend des motifs M1, M2, M3, M4. Pour faciliter la compréhension de l'invention, seuls les motifs appartenant à la bande d'extrémité b'1 disposée à proximité du bord 19 ont été référencés sur la figure 3.

Les motifs M1, M2, M3, M4 de la bande b'1 dérivent d'un même motif de base. Par « dériver d'un même motif de base », on comprend que les motifs M1, M2, M3, M4 de la bande b'1 ont globalement le même dessin. Ce dessin comprend un ensemble de protubérances et de creux agencée d'une manière prédéterminée.

Les motifs M1, M2, M3, M4 de la bande b'1 sont classés en différents types de motifs en fonction de leur largeur. La largeur d'un motif est ici la dimension mesurée selon la direction circonférentielle X. Dans l'exemple de réalisation de la figure 3, la bande b'1 comprend trois types de motifs. Les motifs M1, M2 de la bande b'1 ont la plus faible largeur L1. Ces motifs appartiennent à un premier type de motifs. Le motif M4 a la plus grande largeur L3. Ce motif M4 appartient à un troisième type de motifs. Le motif M3 a une largeur L2 supérieure à la largeur L1 des motifs du premier type de motifs et inférieure à la largeur L3 des motifs du troisième type de motifs. Ce motif M3 appartient à un second type de motifs. A titre d'exemple, le rapport entre la largeur L1 d'un motif du premier type de motifs et la largeur L3 d'un motif du troisième type de motifs est supérieur ou égal à 0,6 et inférieur à 0,8. De la même manière, le rapport entre la largeur L2 d'un motif du second type de motifs et la largeur L3 d'un motif du troisième type de motifs est supérieur ou égal à 0,8 et inférieur ou égal à 0,90.

Les motifs M1, M2, M3, M4 de la bande d'extrémité b'1 sont répartis sur des segments de moule S1, S2, S3. Ces segments de moule sont délimités par des lignes de séparation 9.

Dans l'exemple de la figure 3, les motifs M1, M2 sont groupés sur un premier segment de moule S1. La largeur du segment S1 correspond alors à deux fois la largeur L1 des motifs du premier type de motifs. On s'assure ainsi que le premier segment S1 est suffisamment robuste pour résister aux sollicitations mécaniques lors de son montage ou de son démontage dans le moule.

Le motif M3 appartient à un second segment S2. Le motif M4 appartient à un troisième segment S3.

Les segments S1, S2, S3 comprennent d'autres motifs appartenant à d'autres bandes circonférentielle b'2, b'3, b'4, b'5. Plus particulièrement les segments S1, S2, S3 comportent des motifs M'1, M'2, M'3 appartenant à la bande circonférentielle intermédiaire b'3. Cette bande circonférentielle b'3 est ici disposée au centre de la surface de moulage.

Ainsi, le premier segment de moule S1 comporte un motif M'1 de la bande b'3 présentant une protubérance 23. Cette protubérance 23 a une forme globalement parallélépipédique. La protubérance s'étend principalement selon une direction faisant un angle α avec la direction transversale Y. L'angle α est ici supérieur ou égal à 40°. Dans l'exemple de la figure 3, la protubérance s'étend parallèlement à une diagonale du motif M'1 et la longueur de la protubérance correspond à au moins 90% de la longueur de cette diagonale.

Le second segment de moule S2 et le troisième segment de moule S3 comprennent des motifs M'2, M'3 dérivant d'un même motif de base. Chaque motif M'2, M'3 comprend une protubérance 25. Cette protubérance 25 s'étend selon une direction prédéterminée en faisant un angle β avec la direction transversale Y. L'angle β est ici inférieur à 40°.

L'invention concerne également un pneumatique moulé à partir du moule 1. La surface de roulement de la bande de roulement du pneumatique est alors le négatif de la surface de moulage du moule. Cette bande de roulement comprend une pluralité de bandes circonférentielles de blocs correspondant aux bandes circonférentielles de motifs de la surface de moulage du moule.

On notera que les lignes de séparation 9 des segments de moule sont visibles sur le pneumatique, ces lignes de séparation moulant des bavures sur la bande de roulement du pneumatique. Il est donc possible d'identifier facilement les caractéristiques du moule objet de l'invention sur le pneumatique moulé à partir dudit moule.

## Revendications

1. Moule de vulcanisation pour le moulage et la vulcanisation d'un pneumatique, ledit moule (1) comprenant une surface de moulage (3) s'étendant circonférentiellement, ladite surface de moulage comportant deux bandes de motifs d'extrémité (b'1, b'5) disposées respectivement à proximité de deux bords (19, 21) de la surface de moulage et au moins une bande de motifs intermédiaire (b'2, b'3, b'4) disposée entre les deux bandes de motifs d'extrémité et pour au moins une des bandes d'extrémité tous les motifs de ladite bande dérivent d'un même motif de base, ladite bande d'extrémité (b'1, b'5) comprenant au moins trois types de motifs et les motifs appartenant à un même type de motifs ont une même largeur différente de la largeur des motifs appartenant aux autres types de motifs de la bande, les motifs étant arrangés dans la bande d'extrémité en fonction de leur largeur selon une séquence prédéfinie, la somme des largeurs des motifs appartenant à la bande d'extrémité correspondant à la circonférence de la surface de moulage, les motifs de la bande d'extrémité appartenant à des segments de moule destinés à être assemblés pour former la surface de moulage, **caractérisé en ce que** ladite bande d'extrémité comprend des motifs (M1, M2) appartenant à un premier type de motifs et les motifs du premier type de motifs ont une largeur inférieure à la largeur des motifs appartenant aux autres types de motifs de la bande d'extrémité et **en ce que** les motifs (M1, M2) du premier type de motifs sont groupés au moins par deux sur des premiers segments du moule (S1) et **en ce que** les motifs (M3, M4) de la bande d'extrémité n'appartenant pas au premier type de motifs appartiennent à des seconds segments (S2, S3), chaque second segment ne comprenant qu'un seul motif de ladite bande d'extrémité.

2. Moule de vulcanisation selon la revendication 1, **caractérisé en ce que** les premiers segments de moule et les seconds segments de moule comprennent chacun un motif appartenant à une bande de motifs intermédiaire, les motifs de la bande intermédiaire appartenant aux premiers segments de moule comportant chacun une protubérance (23) ayant une forme globalement parallélépipédique dont la plus grande dimension s'étend selon une première direction en faisant un angle (α) supérieur ou égal à 40° avec une direction transversale (Y), et les motifs de la bande intermédiaire appartenant aux seconds segments de moule comportant chacun une protubérance (25) ayant une forme globalement parallélépipédique dont la plus grande dimension s'étend selon une seconde direction en faisant un angle (β) inférieur à 40° avec ladite direction transversale (Y).

3. Pneumatique moulé et vulcanisé à partir d'un moule de vulcanisation selon l'une quelconque des revendications 1 à 2.

## Patentansprüche

1. Vulkanisierungsgießform zum Gießen und Vulkanisieren eines Luftreifens, wobei die Gießform (1) eine Gießoberfläche (3), die sich in Umfangsrichtung erstreckt, umfasst, wobei die Gießoberfläche zwei Endmusterstreifen (b'1, b'5), die in der Umgebung der beiden Ränder (19, 21) der Gießoberfläche angeordnet sind, und wenigstens einen Zwischenmusterstreifen (b'2, b'3, b'4), der zwischen den zwei Endmusterstreifen angeordnet ist, aufweist, wobei sich für wenigstens einen der Endstreifen sämtliche Muster des Streifens aus demselben Grundmuster ergeben, wobei der Endstreifen (b'1, b'5) wenigstens drei Typen von Mustern enthält und die Muster, die zum selben Mustertyp gehören, dieselbe Breite haben, die von der Breite jener Muster verschieden ist, die zu den anderen Mustertypen des Streifens gehören, wobei die Muster in dem Endstreifen als Funktion ihrer Breite in einer im Voraus definierten Folge angeordnet sind, wobei die Summe der Breiten der Muster, die zu dem Endstreifen gehören, dem Umfang der Gießoberfläche entspricht, wobei die Muster des Endstreifens zu Segmenten der Gießform gehören, die dazu bestimmt sind, zusammengefügt zu werden, um die Gießoberfläche zu bilden, **dadurch gekennzeichnet, dass** der Endstreifen Muster (M1, M2) enthält, die zu einem ersten Mustertyp gehören, und die Muster des ersten Mustertyps eine Breite haben, die kleiner als die Breite jener Muster ist, die zu anderen Mustertypen des Endstreifens gehören, und dass die Muster (M1, M2) des ersten Mustertyps wenigstens paarweise mit ersten Segmenten der Gießform (S1) gruppiert sind und dass die Muster (M3, M4) des Endstreifens, die nicht zu dem ersten Mustertyp gehören, zu zweiten Segmenten (S2, S3) gehören, wobei jedes zweite Segment nur ein einziges Muster des Endstreifens enthält.

2. Vulkanisierungsgießform nach Anspruch 1, **dadurch gekennzeichnet, dass** die ersten Segmente der Gießform und die zweiten Segmente der Gießform jeweils ein Muster umfassen, das zu einem Zwischenmusterstreifen gehört, wobei die Muster des Zwischenstreifens, die zu den ersten Gießformsegmenten gehören, jeweils einen Vorsprung (23) aufweisen, der im Allgemeinen eine Parallelepipedform hat, deren größte Abmessung sich in einer ersten Richtung erstreckt und mit einer Querrichtung (Y) einen Winkel (α) größer oder gleich 40° bildet, und wobei die Muster des Zwischenstreifens, die zu den zweiten Segmenten der Gießformsegmenten gehören, jeweils einen Vorsprung (25) aufweisen, der im Allgemeinen eine Parallelepipedform hat, deren größte Abmessung sich längs einer zweiten Richtung erstreckt und mit der Querrichtung (Y) einen Winkel (β) kleiner 40° bildet.

3. Luftreifen, der anhand einer Vulkanisierungsgießform nach einem der Ansprüche 1 bis 2 gegossen und vulkanisiert ist.

## Claims

1. Vulcanizing mould for moulding and vulcanizing a tyre, the said mould (1) comprising a moulding surface (3) extending circumferentially, the said moulding surface comprising two end strips of patterns (b'1, b'5) arranged respectively close to two edges (19, 21) of the moulding surface and at least one intermediate strip of patterns (b'2, b'3, b'4) positioned between the two end strips of patterns, and for at least one of the end strips, all the patterns of the said strip are derived from one and the same basic pattern, the said end strip (b'1, b'5) comprising at least three types of pattern and the patterns belonging to one and the same pattern type have the same width which differs from the width of the patterns belonging to the other pattern types of the strip, the patterns being arranged in the end strip as a function of their width in a predefined sequence, the sum of the widths of the patterns belonging to the end strip corresponding to the circumference of the moulding surface, the patterns of the end strip belonging to mould segments intended to be assembled to form the moulding surface, **characterized in that** the said end strip comprises patterns (M1, M2) belonging to a first pattern type and the patterns of the first pattern type have a width which is less than the width of the patterns belonging to the other pattern types of the end strip, and **in that** the patterns (M1, M2) of the first pattern type are grouped at least in twos on first segments of the mould (Sl) and **in that** the patterns (M3, M4) of the end strip not belonging to the first pattern type belong to second segments (S2, S3), each second segment comprising just one pattern of the said end strip.

2. Vulcanizing mould according to Claim 1, **characterized in that** the first mould segments and the second mould segments each comprise a pattern belonging to an intermediate strip of patterns, the patterns of the intermediate strip belonging to the first mould segments each comprising a protrusion (23) of parallelepipedal overall shape the longest dimension of which extends in a first direction making an angle (α) greater than or equal to 40° with a transverse direction (Y), and the patterns of the intermediate strip belonging to the second mould segments each comprising a protrusion (25) having a parallelepipedal overall shape the longest dimension of which extends in a second direction making an angle (β) less than 40° with the said transverse direction (Y).

3. Tyre moulded and vulcanized using a vulcanizing mould according to either one of Claims 1 and 2.
